# EUROPEAN PATENT SPECIFICATION

(11) **EP 3 305 372 B1**
(45) Date of publication and mention of the grant of the patent: **04.12.2024**
(21) Application number: 16192736.3
(22) Date of filing: 07.10.2016
(51) Int. Cl.: A62C 3/08, F02C 7/25

(54) **INTEGRATED APU BUILT-IN EXTINGUISHING BOTTLE SYSTEM**
INTEGRIERTES APU-EINGEBAUTES LÖSCHFLASCHENSYSTEM
SYSTÈME DE BOUTEILLE EXTINCTEUR INTÉGRÉE DANS APU INTÉGRÉ

(43) Date of publication of application: 11.04.2018
(73) Proprietor: Airbus Operations S.L., 28906 Getafe (ES)
(72) Inventor: Fernandez Lopez, Pio, 28906 Madrid (ES); Angulo Ibáñez, Fernando, 28906 Madrid (ES)

(56) References cited:
- EP-A2- 2 447 508
- US-A1- 2012 227 370
- US-A1- 2015 283 412

## Description

### OBJECT OF THE INVENTION

The present invention relates to an Auxiliary Power Unit (APU) for aircraft, in order to provide them autonomy in term of power source such as electricity, high or low pneumatic and/or hydraulic pressure.

The object of this invention is to offer a new architecture of APU in order to obtain a more efficient configuration of two aircraft systems, respectively an Auxiliary Power Unit, and an Auxiliary Power Unit Fire Extinguishing System.

### BACKGROUND OF THE INVENTION

An Auxiliary Power Unit (APU) is a gas turbine engine which is used in aircraft to provide electrical and/or pneumatic, and/or hydraulic power to various aircraft systems and components, see for example US 2012/0227370 A1. APU are generally located in the aft fuselage module of the aircraft, at/or near the tail cone section. But as in the turbine engine compartments, or other fire zone of the aircraft, APUs incorporate also extensive measures for fire protection, such as a fire detection and extinguishing systems. The fire extinguishing system dedicated to the APU (APU-FireEx) located in the aft fuselage is a single-shot system provided to extinguish a fire in the APU compartment. The system consists of an extinguishing-agent bottle, which distributes via a circuit of tubes, and discharges via different nozzles, the extinguishing-agent in the APU compartment. The fire-extinguishing-agent bottle is located on the forward side of the APU firewall.

In the traditional knowledge of design of aircraft, it's common to keep outside of the APU compartment systems that are not strictly needed to be inside the compartment. In fact, from an environmental point of view, the APU compartment is consider as a hostile and hazardous zone for systems, because this compartment is subject to high temperatures due to the APU operations, and/or potential corrosive fluids (fuel, oil,...), and/or vibrations, and/or smokes, etc..

In this particular case, the intention behind this traditional configuration is to try to keep the extinguishing agent inside the bottle, and the pyrotechnic squibs which release the agent, away from this hard environmental conditions.

But this configuration according to the state of art has several drawbacks, such as mainly an additional weight. This additional weight is firstly due to the presence of two distinct and highly-resistant casings respectively for the APU and the extinguisher pressurized bottle. The additional weight of this current configuration is also due to the redundancy of brackets and attachment devices (nuts, bolts,..), and due to additional length for cables and pipes needed.

Moreover, the configuration of the APU and the extinguisher pressurized bottle according to the state of art require an important installation time, mainly due to the fact that the operators need to have access and install the two different systems in two different zones. For the same reason, this configuration is not very optimized for efficient inspection and maintenance phases. Furthermore, the squib cartridge is an explosive device, and the bottle is pressurized at high pressure, therefore, consequently this system need to be handled with extreme caution to prevent injury to the operators working or close to this system.

### SUMMARY OF THE INVENTION

In order to solve the drawbacks stated above, the present invention is defined in the attached independent claim and is based on a new architecture of Auxiliary Power Unit. An Auxiliary Power Unit, as a conventional one, comprises a power section (turbine/engine) supplied with fuel, a pneumatic compressor (load compressor), a hydraulic pump, a gearbox and an electric generator in order to allow a working mode for production solely of electric, or pneumatic, or hydraulic power, or any combination of these powers used simultaneously. The novelty of this invention resides in the incorporation of an APU Fire Extinguishing System (APU-FireEx) as a constitutive part into the APU Structure. In such way, that APU-FireEx is a built-in integrated part of the APU gearbox.

The APU-FireEx according the invention is able to operate when the detection system detects an excessive temperature or fire in the APU compartment.

In an embodiment of the invention, the APU-FireEx container is built from fireproof material;

In another embodiment of the invention, the APU-FireEx is isolated by a shield;

In an embodiment of the invention, the APU-FireEx is built-in mounted on the lower side of the APU gearbox in the aft or forward corner. This location of the APU-FireEx is suitable and considered as not interfering with APU integration on aircraft or/and with any other APU surrounding elements neither physically nor functionally.

### BRIEF DESCRIPTION OF THE DRAWINGS

To complete the description and in order to provide for a better understanding of the invention, a set of drawings is provided. Said drawings form an integral part of the description and illustrate preferred embodiments of the invention. The drawings comprise the following figures:
Figure 1, shows a schematic representation of a conventional APU according the state of art;
Figure 2, shows a schematic detailed representation of each component of the APU-FireEX according the state of art,
Figures 3a-3b, show a schematic representation of a cross section of the new architecture of the APU according the invention;

### DETAILED DESCRIPTION OF THE DRAWINGS

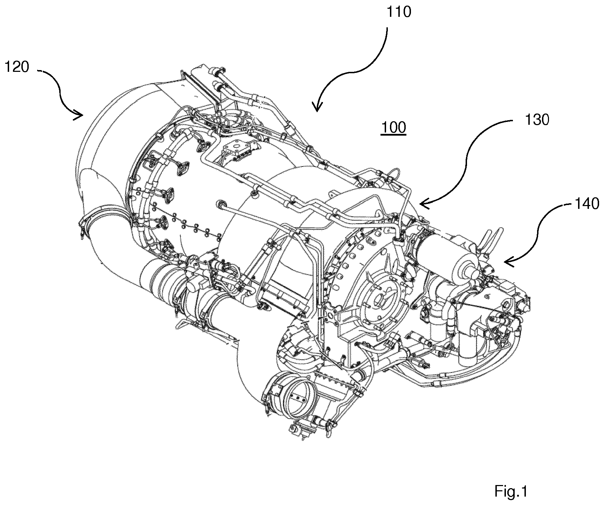

The present invention is directed generally toward auxiliary power unit ("APU"), its interaction with an APU Fire Extinguishing System (APU-FireEx), and associated systems. Several embodiments of the new architecture of APU for aircraft and the compartment associated are described below. A person skilled in the relevant art will understand, however, that the invention may have additional embodiments, and that the invention may be practiced without several of the details of the figures 1-3b.

First of all, and with aid of figure 1, a brief description is made of the arrangement of a conventional APU 100, which comprises a power section 110, such as a turbine supplied with fuel. This power section includes a smoke exhaust 120 and an air intake. This air intake is also applied to a load compressor 130 for providing pneumatic power. The APU 100 comprises an electric generator for generating electric power and sometimes a hydraulic pump in order to provide hydraulic power. The APU 100 comprises also a gearbox 140 in order to adjust the different speeds of rotation needed between the power section 110 and the electric generator for generating of electric, and/or pneumatic, and/or hydraulic power. In working mode, the APU 100 is able to deliver via the gearbox 140 solely electric, or pneumatic, or hydraulic power, or any combination of these powers used simultaneously.

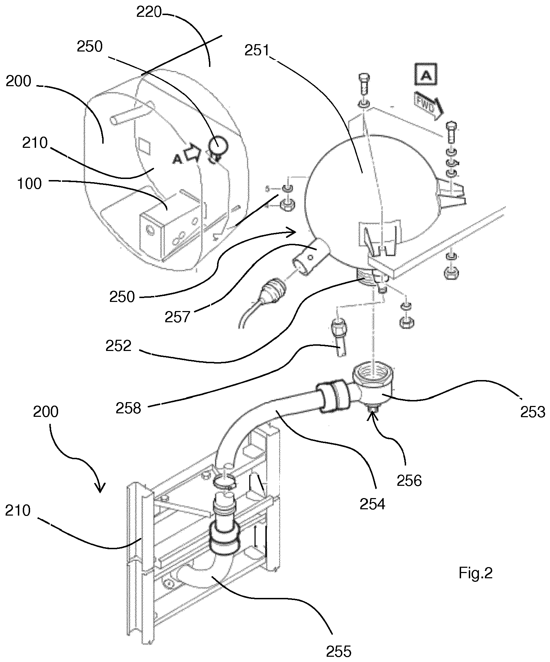

The conventional APU 100, when it is mounted in commercial aircraft is housed in a dedicated compartment 200, shown figure 2, near the tail cone section of the fuselage of the aircraft.

The APU compartment 200 is defined as a fire zone (DFZ) of the aircraft, for this reason the APU 100 needs, as in each fire zone of the aircraft, a fire protection system. As such, the APU 100 is associated to a fire detection and extinguishing systems (APU-FireEX) 250. This APU-FireEx 250 is generally, not to say every time, outside of the APU compartment 200, installed in an APU-FireEX compartment 220, sharing with the APU compartment 200 a firewall 210. The APU-FireEx 250 according the conventional architecture of commercial aircrafts is attached to the front of the firewall 210. The APU-FireEx 250 comprises a pressurized vessel 251 able to contain an extinguisher agent. The vessel 251, generally spherical container, comprises one discharge outlet 252, which is sealed with a metal diaphragm. The discharge outlet is a functional device to release the fire extinguishing agent from the vessel 251 to a distribution pipe 254. In order to do that, a discharge head 253 is installed on the discharge outlet 252. The role of the distribution pipe 254 is to connect the discharge head 253 to the outlet nozzle 255, which is able to discharge the extinguishing agent from the vessel 251 toward the APU compartment 200 through the firewall 210. An electrically-operated explosive cartridge 256 is installed on the discharge head 253. The cartridge 256 comprises usually two squibs for redundancy safety reasons. When an electrical signal is supplied to the squibs, the cartridge explodes and ruptures the metal diaphragm of the discharge outlet 252. The flow of the extinguisher agent from the vessel 251 is discharged through the distribution pipe 254 into the APU compartment as an individual "one shot" discharge. The APU-FireEx 250 comprises also a pressure switch 257, allowing to monitor the APU-FireEx 250 functional integrity, determining whether the extinguisher is charged or not. Furthermore, the vessel 251 comprises a fill fitting assembly 258 in order to fill the FireEx vessel 251 with extinguishing agent at a certain pressure.

This description of the previous architecture, according the traditional design of aircraft, does not allow the presence of the APU-FireEx 250 inside the APU compartment 200 because the APU compartment 200 is consider as a hostile and hazardous zone for systems. In fact, the APU compartment 200 is subject to high temperatures due to the APU 100 operations, and/or potential corrosive fluids (fuel, oil,..), and/or vibrations, and/or smokes, etc. This previous precautions are fully evident and very useful in order to prevent false triggering of the pyrotechnic squibs, able to start the discharge process of the extinguishing agent.

The present invention provide a new architecture of APU 300, fully opposed to the principles strongly established according the traditional design of aircraft, with the incorporation of the APU-FireEx 250 as a constitutive part into the structure of the APU 400.

According to the invention, the APU-FireEx 250 is built-in integrated part of the frame of a gearbox 340 in order to avoid any interfering with the APU integration on an aircraft or with any other APU 300 surrounding element neither physically nor functionally.

The presence of the APU-FireEx 250 as a constitutive part into the structure of the APU 300 allows a drastic reduction in airborne weight by using of the same frame or casing of the gearbox 250 instead of to use two distinct structures as in the state of art. The main advantage, in addition to the reduction of weight, of the manufacturing of these two systems, according to the invention in a single assembly, with the vessel 251 of the APU-FireEx 250 built-in integrated part of the frame of the gearbox 340, is to allow to avoid the thicknesses and the redundancy of structural elements. Secondarily, it allows also a redistribution and an optimization of the loads, the forces, the stresses and the pressures on the assembly, because the vessel 251 and the gearbox 340 frame are manufactured in the same fireproof metal.

Currently, and as required, any element housed in an engine compartment (such as the APU compartment) has to be in fireproof material. But in order to increase the protection of the vessel 251 and elements associated and particularly in order to prevent false triggering of the pyrotechnic squibs of the cartridge 256, able to start the discharge process of the extinguishing agent, the fire extinguishing system 250 is partially or fully isolated by a shield structure.

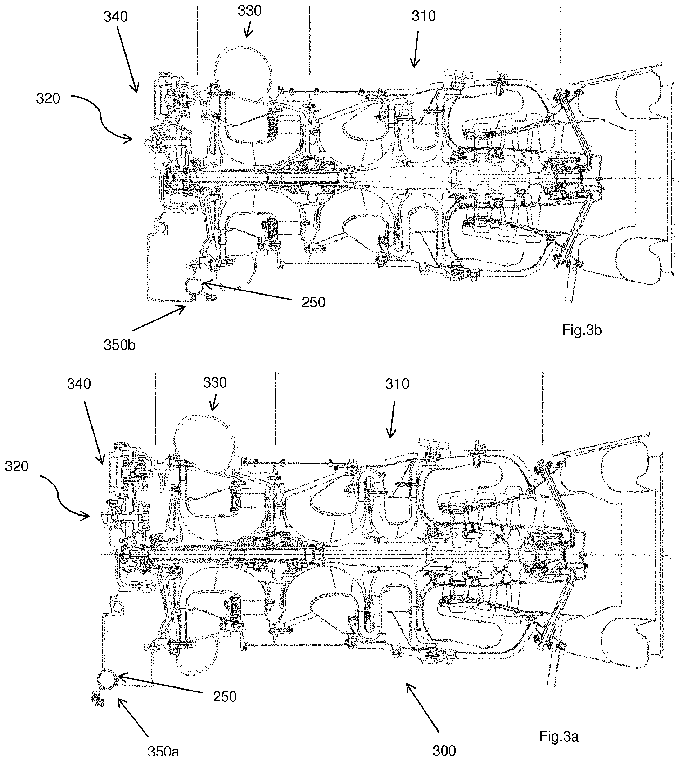

In an embodiment of the invention, the vessel 251 can be built-in mounted on the lower side of the frame of the gearbox 340 in the aft or forward corner, respectively referenced 350a (figure 3a), 350b (figure 3b).

## Claims

1. - Auxiliary Power Unit (300) for aircraft, which comprises:
- a power section (310) supplied with fuel,
- an electric generator (320), able to provide electric power,
- a load compressor (330), able to provide pneumatic power,
- a gearbox (340), able to adjust the different speeds of rotation needed between the power section (310) and the electric generator (320) in order to deliver solely electric, or pneumatic, or any combination of these powers used simultaneously, the gearbox (340) having a frame,
wherein a fire extinguishing system (250) is incorporated as a constitutive part into the auxiliary power unit (300) structure as a built-in integrated part of the gearbox (340),
wherein the fire extinguishing system (250) is able to operate in discharging a flow of extinguisher agent when a detection system detects an excessive temperature or fire in the Auxiliary Power Unit compartment (200),
and wherein the fire extinguishing system (250) comprises a vessel (251) built from the same fireproof material used to build the gearbox frame.

2. - Auxiliary Power Unit (300), according to claim 1, wherein the fire extinguishing system (250) is built-in mounted on the lower side of the gearbox (140) in the aft or forward corner (350a, 350b).

3. - Auxiliary Power Unit (300), according to the previous claims, wherein the fire extinguishing system (250) is partially or fully isolated by a shield structure.

4. - Aircraft comprising a propulsion unit for propelling the aircraft and an auxiliary power unit (300) according to the previous claims, operable independently of the propulsion unit, wherein a fire extinguishing system (250) is incorporated as a constitutive part into the auxiliary power unit (300) structure, and able to operate in discharging a flow of extinguisher agent, when a detection system detects an excessive temperature or fire in the Auxiliary Power Unit compartment (200).

## Patentansprüche

1. Hilfsturbine (300) für ein Luftfahrzeug, wobei die Hilfsturbine Folgendes umfasst:
- einen Leistungsabschnitt (310), dem Kraftstoff zugeführt wird,
- einen Stromgenerator (320), der elektrische Leistung bereitstellen kann,
- einen Lastkompressor (330), der pneumatische Leistung bereitstellen kann,
- ein Getriebe (340), das die verschiedenen Drehzahlen, die zwischen dem Leistungsabschnitt (310) und dem Stromgenerator (320) notwendig sind, einstellen kann, um rein elektrische oder pneumatische oder irgendeine Kombination dieser Leistungen, die gleichzeitig verwendet werden, zu liefern, wobei das Getriebe (340) einen Rahmen besitzt,
wobei in der Struktur der Hilfsturbine (300) als ein eingebauter integrierter Teil des Getriebes (340) ein Feuerlöschsystem (250) als ein Bestandteil enthalten ist,
wobei des Feuerlöschsystem (250) durch Ausstoßen einer Strömung eines Feuerlöschmittels arbeiten kann, wenn ein Detektionssystem in der Hilfsturbinenkammer (200) eine übermäßige Temperatur oder einen Brand detektiert,
und wobei das Feuerlöschsystem (250) ein Gefäß (251) umfasst, das aus demselben feuerfesten Material aufgebaut ist, das zum Aufbauen des Getrieberahmens verwendet wird.

2. Hilfsturbine (300) nach Anspruch 1, wobei das Feuerlöschsystem (250) montiert in der hinteren oder vorderen Ecke (350a, 350b) auf der Unterseite des Getriebes (140) eingebaut ist.

3. Hilfsturbine (300) nach den vorhergehenden Ansprüchen, wobei das Feuerlöschsystem (250) teilweise oder vollständig durch eine Abschirmstruktur isoliert ist.

4. Luftfahrzeug, das eine Fortbewegungseinheit zum Fortbewegen des Luftfahrzeugs und eine Hilfsturbine (300) nach den vorhergehenden Ansprüche, die unabhängig von der Fortbewegungseinheit betreibbar ist, umfasst, wobei in der Struktur der Hilfsturbine (300) ein Feuerlöschsystem (250) als ein Bestandteil enthalten ist und in der Lage ist, beim Ausstoßen einer Strömung eines Feuerlöschmittels zu arbeiten, wenn ein Detektionssystem in der Hilfsturbinenkammer (200) eine übermäßige Temperatur oder einen Brand detektiert.

## Revendications

1. Groupe auxiliaire de puissance (300) pour aéronef, comprenant :
- une section de puissance (310) alimentée en carburant,
- une génératrice électrique (320), capable de fournir une puissance électrique,
- un compresseur de charge (330), capable de fournir une puissance pneumatique,
- une boîte à engrenages (340), capable de régler les différentes vitesses de rotation nécessaires entre la section de puissance (310) et la génératrice électrique (320) afin de fournir une puissance uniquement électrique, uniquement pneumatique, ou n'importe quelle combinaison de ces puissances utilisées simultanément, cette boîte à engrenages (340) ayant un bâti,
un système d'extinction d'incendie (250) étant incorporé, comme partie constitutive, dans la structure du groupe auxiliaire de puissance (300), comme étant incorporé à et faisant partie intégrante de la boîte à engrenages (340),
ce système d'extinction d'incendie (250) étant capable de fonctionner en déchargeant un flux d'agent extincteur lorsqu'un système de détection détecte une température excessive ou du feu dans le compartiment du groupe auxiliaire de puissance (200),
et ce système d'extinction d'incendie (250) comportant un récipient (251) fabriqué à partir du même matériau ignifuge que celui utilisé pour fabriquer le bâti de la boîte à engrenages.

2. Groupe auxiliaire de puissance (300), selon la revendication 1, dans lequel le système d'extinction d'incendie (250) est incorporé à la boîte d'engrenages (140) et monté sur le côté inférieur de celle-ci dans le coin arrière ou avant (350a, 350b).

3. Groupe auxiliaire de puissance (300), selon les revendications précédentes, dans lequel le système d'extinction d'incendie (250) est isolé partiellement ou complètement par une structure de blindage.

4. Aéronef comportant un groupe de propulsion pour propulser l'aéronef et un groupe auxiliaire de puissance (300) selon les revendications précédentes, pouvant être utilisé indépendamment du groupe de propulsion, un système d'extinction d'incendie (250) étant incorporé dans la structure du groupe auxiliaire de puissance (300) comme étant une partie constitutive de celle-ci, et capable de fonctionner en déchargeant un flux d'agent extincteur, lorsqu'un système de détection détecte une température excessive ou du feu dans le compartiment du groupe auxiliaire de puissance (200).
